(19) **Europäisches Patentamt / European Patent Office / Office européen des brevets**

(11) **EP 4 679 527 A1**

(12) **EUROPEAN PATENT APPLICATION**
published in accordance with Art. 153(4) EPC

(43) Date of publication:
**14.01.2026 Bulletin 2026/03**

(21) Application number: **24824888.2**

(22) Date of filing: **31.01.2024**

(51) International Patent Classification (IPC):
**H01M 4/505** (2010.01)

(52) Cooperative Patent Classification (CPC):
Y02E 60/10

(86) International application number:
**PCT/CN2024/074905**

(87) International publication number:
**WO 2024/259984 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.06.2023 CN 202310745269**

(71) Applicant: **Contemporary Amperex Technology Co., Limited**
**Ningde, Fujian 352100 (CN)**

(72) Inventors:
• **WU, Kai**
**Ningde, Fujian 352100 (CN)**
• **LIANG, Zibin**
**Ningde, Fujian 352100 (CN)**
• **WANG, Yuhao**
**Ningde, Fujian 352100 (CN)**
• **LIN, Wenguang**
**Ningde, Fujian 352100 (CN)**
• **LI, Qiang**
**Ningde, Fujian 352100 (CN)**
• **ZHANG, Xinxin**
**Ningde, Fujian 352100 (CN)**

(74) Representative: **Kraus & Lederer PartGmbB**
**Thomas-Wimmer-Ring 15**
**80539 München (DE)**

(54) **POSITIVE ELECTRODE ACTIVE MATERIAL AND PREPARATION METHOD THEREFOR, POSITIVE ELECTRODE SHEET, BATTERY, AND ELECTRIC DEVICE**

(57) A positive electrode active material and a preparation method thereof, a positive electrode plate, a battery, and an electric apparatus are provided. The positive electrode active material includes: $Na_xMn_{a-}Cu_bM1_cM2_dM3_eO_{2+f-g}R_g$, where M1 includes an element capable of forming a cation with a valence of +2 or less, M2 includes an element capable of forming a cation with a valence of +3, M3 includes an element capable of forming a cation with a valence of +4 or higher, R includes a Group VIIA element, $0.67 \leq x \leq 1.2$, $a + b + c + d + e = 1$, $a > 0$, $b > 0$, $c \geq 0$, $d \geq 0$, $e \geq 0$, $-0.1 \leq f \leq 0.1$, $0 \leq g \leq 0.05$, and (I).

FIG. 1

EP 4 679 527 A1

**Description**

**TECHNICAL** FIELD

This application pertains to the field of battery technology, specifically, to a positive electrode active material and a preparation method thereof, a positive electrode plate, a battery, and an electric apparatus.

BACKGROUND

Lithium-ion batteries are green and environmentally friendly, and are characterized by high-energy and low-carbon. The batteries are not only applied in energy storage power systems such as hydroelectric, thermal, wind, and solar power stations but also widely used in electric vehicles such as electric bicycles, electric motorcycles, and electric cars, military equipment, aerospace, and other fields. However, lithium is scarce in crust. With the increasing demand and supply shortage of lithium resources, the price has risen rapidly. Sodium shares similar physicochemical properties with lithium, and sodium is abundant in crust and is cost-effective. Sodium-ion batteries developed by substituting sodium for lithium have attracted growing attention.

**SUMMARY**

In view of the technical issues in the background, this application provides a positive electrode active material aimed at improving a specific capacity of a positive electrode and cycling stability of a battery.

To achieve the above objective, a first aspect of this application provides a positive electrode active material, including:

$$Na_xMn_aCu_bM1_cM2_dM3_eO_{2+f-g}R_g,$$

where M1 includes an element capable of forming a cation with a valence of +2 or less, M2 includes an element capable of forming a cation with a valence of +3, M3 includes an element capable of forming a cation with a valence of +4 or higher, R includes a Group VIIA element, $0.67 \leq x \leq 1.2$, $a+b+c+d+e=1$, $a>0$, $b>0$, $c\geq0$, $d\geq0$, $e\geq0$, $-0.1\leq f\leq 0.1$, $0\leq g\leq 0.05$, and

$$\frac{b^2 \times (b+c)^2 \times (b+d)}{a \times (a+e)^4} \leq 0.04 \ .$$

The positive electrode active material of the first aspect of this application has at least the following beneficial effects: the incorporation of more copper into a crystal lattice of the positive electrode active material can be facilitated, and cycling stability of the positive electrode active material can be improved while reducing an amount of CuO impurity phases, and increasing a specific capacity of the positive electrode active material.

In some embodiments of this application, M1 includes one or more of the following elements: Li, K, Mg, Ca, Zn, and Ni, optionally including Ni. Selecting M1 from the elements within the given range can provide charge compensation during sodium intercalation and deintercalation or activate redox charge compensation of nearby oxygen, helping to improve the specific capacity of the positive electrode active material.

In some embodiments of this application, M2 includes one or more of the following elements: Cr, Al, B, Fe, Co, In, Y, La, and Bi, optionally including one or more of Cr, Fe, and Co. Selecting M2 from the elements within the given range can provide charge compensation during sodium intercalation and deintercalation or activate redox charge compensation of nearby oxygen, helping to improve the specific capacity of the positive electrode active material.

In some embodiments of this application, M3 includes one or more of the following elements: Ti, Zr, Nb, Mo, W, Sn, Sb, Si, and Ce. Selecting M3 from the elements within the given range helps to improve the cycling stability and specific capacity of the positive electrode active material.

In some embodiments of this application, R includes one or more of the following elements: F and Cl. Selecting R from the elements in the given range is beneficial for stabilizing oxygen in the positive electrode active material, thereby mitigating structural damage due to lattice oxygen release in the positive electrode active material, enhancing the stability of the positive electrode active material, and further improving the capacity retention rate of the battery.

In some embodiments of this application, $0.01 \leq \dfrac{b^2 \times (b+c)^2 \times (b+d)}{a \times (a+e)^4} \leq 0.04$ . Satisfying the given condition is beneficial for further improving the specific capacity and cycling stability of the positive electrode active material.

In some embodiments of this application, $0.7 \leq x \leq 1$, optionally $0.8 \leq x \leq 1$.

In some embodiments of this application, $0.3 \leq a \leq 0.7$, optionally $0.3 \leq a \leq 0.5$.

In some embodiments of this application, $0.05 \leq b \leq 0.2$, optionally $0.1 \leq b \leq 0.15$.

In some embodiments of this application, $0.1 \leq c \leq 0.3$, optionally $0.15 \leq c \leq 0.25$.

In some embodiments of this application, $0.1 \leq d \leq 0.4$, optionally $0.2 \leq d \leq 0.3$.

In some embodiments of this application, $0 \leq e \leq 0.1$, optionally $0.01 \leq e \leq 0.05$.

In some embodiments of this application, a phase state of the positive electrode active material includes a first phase, where an interlayer spacing of the first phase is 0.525 nm to 0.545 nm. The positive electrode active material based on the first phase has a higher first-cycle Coulombic efficiency.

In some embodiments of this application, the phase state of the positive electrode active material includes a second phase, where an interlayer spacing of the second phase is 0.54 nm to 0.57 nm. The positive electrode active material based on the second phase allows faster sodium-ion migration, resulting in better rate performance.

In some embodiments of this application, the phase state of the positive electrode active material includes an 3 phase, a space group includes $R\overline{3}m$, and an interlayer spacing is 0.53 nm to 0.54 nm. The positive electrode active material satisfying the O3 phase state has a higher sodium-ion amount, which is beneficial for improving the first-cycle Coulombic efficiency of the positive electrode active material and the battery.

In some embodiments of this application, the phase state of the positive electrode active material includes a P2 phase, a space group includes $P6_3/mmc$, and an interlayer spacing is 0.54 nm to 0.57 nm. The positive electrode active material satisfying the P2 phase state allows faster sodium-ion migration, which is beneficial for improving the rate performance and fast-charge performance of the positive electrode active material and the battery.

In some embodiments of this application, the phase state of the positive electrode active material includes both the O3 phase and the P2 phase, and a mass ratio of the positive electrode active material in the O3 phase state to the positive electrode active material in the P2 phase state is (1 to 10):1. Satisfying the given condition is beneficial for leveraging the synergistic effect of the O3 and P2 phases.

In some embodiments of this application, a particle size $D_v50$ of the positive electrode active material is 2 $\mu$m to 30 $\mu$m.

In some embodiments of this application, a specific surface area of the positive electrode active material is 0.1 $m^2/g$ to 2 $m^2/g$.

In some embodiments of this application, a compacted density of the positive electrode active material under a pressure of 300 MPa is 3 $g/cm^3$ to 5 $g/cm^3$.

A second aspect of this application provides a method for preparing the positive electrode active material of the first aspect of this application, including roasting raw material components including a sodium source, a manganese source, and a copper source.

The method for preparing the positive electrode active material of the second aspect of this application has at least the following beneficial effects: the preparation is simple, and the manganese and copper elements are used to improve the electrochemical performance of the positive electrode active material.

In some embodiments of this application, the sodium source, the manganese source, and the copper source each independently include one or more of an oxide, a hydroxide, a carbonate, and a bicarbonate.

In some embodiments of this application, the raw material components further include one or more of an M1 source, an M2 source, and an M3 source.

In some embodiments of this application, the M1 source, M2 source, and M3 source each independently include one or more of an oxide, a hydroxide, a carbonate, and a bicarbonate.

A third aspect of this application provides a positive electrode plate, including the positive electrode active material of the first aspect of this application, or the positive electrode active material prepared based on the method of the second aspect of this application.

A fourth aspect of this application provides a battery, including the positive electrode plate of the third aspect of this application, the positive electrode active material prepared by the method of the second aspect of this application, or the positive electrode active material of the first aspect of this application.

A fifth aspect of this application provides an electric apparatus, including the battery described in the fourth aspect of this application.

## DESCRIPTION OF DRAWINGS

The above and/or additional aspects and advantages of this application become apparent and readily understood from the descriptions of the embodiments with reference to the following drawings, where:

FIG. 1 is a schematic structural diagram of a battery according to an embodiment of this application;

FIG. 2 is a schematic structural diagram of a battery module according to an embodiment of this application;

FIG. 3 is a schematic structural diagram of a battery pack according to an embodiment of this application;

FIG. 4 is an exploded view of FIG. 3;

FIG. 5 is a schematic diagram of an electric apparatus using a battery as a power source according to an embodiment of this application; and

FIG. 6 is an XRD comparison diagram of the positive electrode active materials prepared in Example 1 and Comparative example 1 of this application.

Description of reference signs:

1: battery; 2: battery module; 3: battery pack; 4: upper case; and 5: lower case.

## DESCRIPTION OF EMBODIMENTS

This application is further described below with reference to specific embodiments. It should be understood that these specific embodiments are only used to illustrate this application and are not intended to limit the scope of this application.

Reference to "embodiments" in this application means that specific features, structures, or characteristics described with reference to the embodiments may be included in at least one embodiment of this application. The appearance of this phrase in various places in the specification does not necessarily refer to the same embodiment, nor is it an independent or alternative embodiment mutually exclusive with other embodiments. Persons skilled in the art explicitly and implicitly understand that the embodiments described in this application can be combined with other embodiments.

A "range" disclosed in this application are defined in the form of a lower limit and/or an upper limit, and a given range is defined by a selected lower limit and/or upper limit. Boundaries of the specific range is defined by the selected lower limit and/or upper limit. Ranges defined in this manner may include or exclude endpoints and can be arbitrarily combined, meaning any lower limit can be combined with any upper limit to form a range not explicitly described, and any lower limit can be combined with any other lower limit to form a range not explicitly described, and similarly, any upper limit can be combined with any other upper limit to form a range not explicitly described. Additionally, each individually disclosed point or single numerical value can serve as a lower or upper limit to form a range not explicitly described when combined with any other point or single numerical value or with another lower limit or upper limit.

Unless otherwise specified, all embodiments and optional embodiments of this application can be combined with each other to form new technical solutions, and such technical solutions should be considered included in the disclosure of this application.

Unless otherwise specified, all technical features and optional technical features mentioned in this application can be combined with each other to form new technical solutions, and such technical solutions should be considered included in the disclosure of this application.

Unless otherwise specified, the terms "include" and "comprise" mentioned in this application indicate an open-ended inclusion. For example, "include" and "comprise" may indicate that other components not listed can also be included or comprised. Additionally, in this application, the terms "multiple" and "various" refer to two or more.

Unless otherwise specified, in this application, the term "and/or" is merely an association describing associated objects, indicating that three relationships may exist, for example, A and/or B can represent: A alone, A and B together, and B alone. Additionally, the character "/" in this application generally indicates an "or" relationship between the associated objects.

Unless otherwise defined, all technical and scientific terms used in this application have the same meaning as commonly understood by persons skilled in the technical field of this application; the terms used in this application are only for the purpose of describing specific embodiments and are not intended to limit this application; the terms "include" and "have" in the specification and claims of this application, as well as any variations thereof, are intended to cover non-exclusive inclusion. Unless otherwise specified, the terms used in this application have well-known meanings commonly understood by persons skilled in the art. Unless otherwise specified, the numerical values of the parameters mentioned in this application can be measured using various measurement methods commonly used in the art (for example, they can be tested according to the methods provided in the embodiments of this application).

Currently, with the continuous rise in lithium resource prices, the development of sodium-ion batteries by substituting sodium for lithium has received increasing attention. Copper doping is beneficial for improving the electrochemical performance of layered sodium-ion positive electrode active materials. In copper-containing layered oxide positive electrode active materials for sodium-ion batteries, when Cu ions enter a lattice of a layered oxide, they can effectively stabilize the structure and increase cycling stability. However, if the layered oxide product contains a large amount of CuO impurity phases, it is likely to lead to a decrease in a specific capacity of the product, and a low Cu amount in the lattice can easily reduce the cycling stability of the layered oxide.

To address the above issues, in this application, proportions of components in a positive electrode active material $Na_xMn_aCu_bM1_cM2_dM3_eO_{2+f-g}R_g$ are adjusted to facilitate incorporation of more Cu ions into the lattice of the layered oxide, reducing the amount of CuO impurity phases, thereby improving the cycling stability of the positive electrode active material while enhancing the specific capacity.

The positive electrode active material disclosed in the embodiments of this application is suitable for secondary batteries, and the batteries disclosed in the embodiments of this application can be used in electric devices that use batteries as power sources or in various energy storage systems that use batteries as energy storage components. Electric devices may include, but are not limited to, mobile phones, tablets, laptops, electric toys, electric tools, electric scooters, electric vehicles, ships, spacecraft, and the like. Electric toys may include fixed or mobile electric toys, such as game consoles, electric car toys, electric ship toys, and electric airplane toys, and spacecraft may include airplanes, rockets, space shuttles, and spaceships.

A first aspect of this application provides a positive electrode active material, which includes: $Na_xMn_aCu_bM1_cM2_dM3_eO_{2+f-g}R_g$, where M1 includes an element capable of forming a cation with a valence of +2 or less, M2 includes an element capable of forming a cation with a valence of +3, M3 includes an element capable of forming a cation with a valence of +4 or higher, R includes a Group VIIA element, $0.67 \leq x \leq 1.2$, $a+b+c+d+e = 1$, $a > 0$, $b > 0$, $c \geq 0$, $d \geq 0$, $e \geq 0$, $-0.1 \leq f \leq 0.1$, $0 \leq g \leq 0.05$, and $\dfrac{b^2 \times (b+c)^2 \times (b+d)}{a \times (a+e)^4} \leq 0.04$ .

As some specific examples, the value of x may be 0.67, 0.7, 0.75, 0.8, 0.85, 0.9, 0.95, 1, 1.05, 1.1, 1.15, or 1.2, or may be in any range defined by the above values. As further specific examples, the value of a may be 0.1, 0.2, 0.3, 0.4, 0.5, 0.6, 0.7, 0.8, or 0.9, or may be in any range defined by the above values. As other specific examples, the value of b may be 0.05, 0.15, 0.25, 0.35, 0.45, 0.55, 0.65, 0.75, 0.85, or 0.95, or may be in any range composed of the above values. As other specific examples, the value of c may be 0, 0.05, 0.15, 0.25, 0.35, 0.45, 0.55, 0.65, 0.75, 0.85, or 0.95, or may be in any range defined by the above values. As still other specific examples, the value of d may be 0, 0.1, 0.2, 0.3, 0.4, 0.5, 0.6, 0.7, 0.8, or 0.9, or may be in any range defined by the above values. As other specific examples, the value of e may be 0, 0.05, 0.15, 0.25, 0.35, 0.45, 0.55, 0.65, 0.75, 0.85, or 0.95, or any range composed of the above values. As other specific examples, the value of f may be -0.1, -0.08, -0.06, -0.05, -0.03, -0.02, -0.01, 0, 0.01, 0.02, 0.03, 0.05, 0.08, or 0.1, or may be in any range defined by the above values. As other specific examples, the value of g may be 0, 0.001, 0.005, 0.01, 0.015, 0.02, 0.025, 0.03, 0.035, 0.04, 0.045, or 0.05, or may be in any range defined by the above values. As other specific examples, the value of $\dfrac{b^2 \times (b+c)^2 \times (b+d)}{a \times (a+e)^4}$ may be 0.001, 0.005, 0.01, 0.015, 0.02, 0.025, 0.03, 0.035, or 0.04, or may be in any range defined by the above values. It can be understood that in the "manganese site" doping described in this application, the manganese site refers to the position of the manganese element or M3 element in the lattice of the positive electrode active material $Na_xMn_aCu_bM1_cM2_dM3_eO_{2+f-g}R_g$, where the manganese site may be entirely occupied by the manganese element or partially doped with M3 element.

In this application, when analyzing the composition, element types, and valences of the positive electrode active material, test methods include, but are not limited to, XRD test, X-ray photoelectron spectroscopy (XPS), and EDS energy spectrum analysis; molar amounts of the elements in the positive electrode active material can be obtained through inductively coupled plasma emission spectroscopy (ICP test). For the instrument standard, reference can be made to EPA6010D-2014 "Inductively coupled plasma-atomic emission spectrometry". Specifically, the sample may be chemically digested into a solution, atomized into a plasma to excite the characteristic spectral lines of the elements, and an element amount can be qualitatively and quantitatively analyzed based on wavelengths and intensities (proportional to concentrations) of the spectral lines.

It should be noted that in a positive electrode plate, battery, or electric apparatus, in processes such as formation and cycling, sodium ions may be consumed, and therefore a measured sodium amount x in the positive electrode active material is less than 1; additionally, if a sodium supplement is used in the positive electrode plate and negative electrode plate, the measured sodium amount x in the positive electrode active material may be greater than 1 after battery formation and cycling. Furthermore, during charge and discharge of the battery, Na undergoes intercalation, deintercalation, and consumption, and a molar amount of Na varies at different discharge states. In the enumeration of the positive electrode active material in this application, a molar amount of Na refers to the initial state of the material, for example, a pre-feeding state; when the positive electrode active material is applied in a battery system, the molar amount of Na changes after charge and discharge cycles.

Additionally, during the preparation of the positive electrode active material, due to factors such as different oxygen amount control or lattice oxygen release, the oxygen amount in the positive electrode active material may vary. In the enumeration of the positive electrode active material in this application, the molar amount of oxygen is only a theoretical value, and the actual molar amount of oxygen may fluctuate.

It can be understood that the positive electrode active material provided in this application, $Na_xMn_aCu_bM1_cM2_dM3_eO_{2+f-g}R_g$, is a layered oxide. In the layered oxide, it is difficult for Cu to enter an oxygen octahedra in the transition metal layer. By increasing an amount of ions that easily form high-valences, such as Mn, Ti, and Zr, while reducing an amount of low-valence ions, more distorted oxygen octahedra can be formed in a local structure of the layered oxide, thereby providing more lattice distortion buffering for Cu to enter the oxygen octahedra, allowing more Cu to enter the layered oxide lattice. Elements that easily form low-valence ions, that is, elements that can easily form ions with even lower valences, namely, monovalent and divalent ions, such as Cu, Li, Mg, and Ni, have a lower probability of forming distorted oxygen octahedra in a neighboring structure, while elements that easily form trivalent ions, such as Al, have a slightly higher probability of forming distorted oxygen octahedra.

In the embodiments of this application, M1 may be selected as an element that easily forms a low-valence cation with a valence of +2 or less, M2 may be selected as an element that easily forms a cation with a valence of +3, and M3 may be selected as an element that easily forms a high-valence cation with a valence of +4 or higher. Cu, M1, and M2 elements, with lower valences, can provide charge compensation during sodium intercalation and deintercalation or activate redox charge compensation of nearby oxygen, thereby increasing the amount of sodium that can be intercalated and deintercalated in the layered oxide, enhancing the specific capacity. However, the introduction of M1 and M2 elements easily causes Cu precipitation, reducing Cu in the layered oxide lattice. Compared with M2 element, the introduction of M1 element with a lower valence has a relatively weaker effect on promoting Cu precipitation. Additionally, M3 element can be regarded as manganese-site doping. When the amounts of M1 and M2 elements decreases and the amount of M3 element increases, local distortion of the lattice in the layered oxide is facilitated, particularly the distortion of the Mn-$O_6$ octahedra octahedra near the manganese element, significantly buffering the lattice distortion caused by Cu entering the lattice, thereby accommodating more Cu. More Cu entering the layered oxide lattice helps to stabilize the structure of the layered oxide, improves cycling stability, reduces an amount of CuO impurity phases, and provides charge compensation during sodium intercalation and deintercalation as an active element, improving specific capacity. In $\dfrac{b^2 \times (b+c)^2 \times (b+d)}{a \times (a+e)^4}$ , a ratio of the numerator to the denominator to some extent reflects the degree of ease and an amount of formation of distorted oxygen octahedra due to changes in the amounts of low-valence and high-valence elements. The exponents of b, b + c, and b + d in the numerator and a + e in the denominator to some extent reflect the probability that the elements Cu, M1, M2, and M3 form distorted oxygen octahedra. By comprehensively adjusting the proportions of element components in the positive electrode active material $Na_xMn_aCu_bM1_cM2_dM3_eO_{2+f-g}R_g$ and ensuring that $\dfrac{b^2 \times (b+c)^2 \times (b+d)}{a \times (a+e)^4}$ meets the given range, the incorporation of a large amount of Cu into the lattice of the layered oxide can be facilitated, and cycling stability can be improved while reducing the amount of CuO impurity phases, thereby increasing the specific capacity.

The positive electrode active material of the first aspect of this application has at least the following beneficial effects: the incorporation of more copper into the crystal lattice of the positive electrode active material can be facilitated, and the cycling stability of the positive electrode active material can be improved while reducing the amount of CuO impurity phases, and increasing the specific capacity of the positive electrode active material.

In some embodiments of this application, in the positive electrode active material $Na_xMn_aCu_bM1_cM2_dM3_eO_{2+f-g}R_g$, M1, M2, M3, and R may each independently include one or more elements. Unless otherwise specified, when one or more of M1, M2, M3, or R include two or more elements, the limitation on the numerical range of the corresponding stoichiometric number in the formula applies not only to the stoichiometric number of each element at this site but also to a sum of stoichiometric numbers of all elements at this site. M1 is used as an example. When M1 includes two or more elements $M1_1$, $M1_2$, ..., $M1$, the stoichiometric numbers $c_1$, $c_2$, ..., $c_n$ of $M1_1$, $M1_2$, ..., $M1_n$ each need to fall within a numerical range defined for c in this application, and a sum of $c_1$, $c_2$, ..., $c_n$ should also fall within this numerical range. Similarly, for cases where M2, M3, or R include two or more elements, the limitation on the numerical range of the stoichiometric numbers for M2, M3, or R has the same meaning.

In some embodiments of this application, the positive electrode active material may include, but is not limited to, the aforementioned $Na_xMn_aCu_bM1_cM2_dM3_eO_{2+f-g}R_g$. For example, the positive electrode active material may include only $Na_xMn_aCu_bM1_cM2_dM3_eO_{2+f-g}R_g$, or may include both $Na_xMn_aCu_bM1_cM2_dM3_eO_{2+f-g}R_g$ and other types of positive electrode active materials. As another example, a surface of the positive electrode active material $Na_xMn_aCu_bM1_cM2_dM3_eO_{2+f-g}R_g$ may further include a coating layer. The specific types of other positive electrode active materials and coating layer materials are not particularly limited, and persons skilled in the art can flexibly make selections according to actual needs. Details are not described herein.

In some embodiments of this application, M1 may include one or more of the following elements: Li, K, Mg, Ca, Zn, Ni, optionally, may include Ni.

The M1 element within the given range easily forms low-valence cations with a valence of +2 or less, such as Li element that easily forms cations $Li^+$ with a valence of +1. Introducing the active M1 element within the given range can provide charge compensation during sodium intercalation and deintercalation or activate redox charge compensation of nearby oxygen. This is beneficial for improving the specific capacity of the positive electrode active material. Optionally, M1 may include Ni element, for example, may include only Ni element or may include both Ni element and one or more elements selected from Li, K, Mg, Ca, and Zn. Selecting Ni element is beneficial for further improving the specific capacity of the positive electrode active material.

In some embodiments of this application, M2 may include one or more of the following elements: Cr, Al, B, Fe, Co, In, Y, La, Bi, and optionally, may include one or more of Cr, Fe, and Co.

The M2 element within the given range also easily forms low-valence cations with a valence of +2 or less. Introducing the active M2 element within the given range can also provide charge compensation during sodium intercalation and deintercalation or activate redox charge compensation of nearby oxygen. This is beneficial for improving the specific capacity of the positive electrode active material. Optionally, M2 may include one or more of Cr, Fe, and Co, for example, M2 may include one of Cr, Fe, and Co. Selecting one or more elements of Cr, Fe, and Co is beneficial for further improving the specific capacity of the positive electrode active material. Further optionally, when M2 includes one or more of Cr, Fe, and Co, and M1 may include Ni element.

In some embodiments of this application, M3 may include one or more of the following elements: Ti, Zr, Nb, Mo, W, Sn, Sb, Si, and Ce.

The M3 element within the given range easily forms high-valence cations with a valence of +4 or higher. Introducing M3 element into the positive electrode active material $Na_xMn_aCu_bM1_cM2_dM3_eO_{2+f-g}R_g$ is beneficial for promoting local distortion of the lattice of the layered oxide by adjusting the relative amounts of M3, M1, and M2 elements, thereby allowing more Cu to enter the lattice of the layered oxide, improving cycling stability while reducing the amount of CuO impurity phases. Additionally, copper entering the layered oxide lattice can serve as an active element to provide charge compensation during sodium intercalation and deintercalation, improving the specific capacity. Selecting M3 from the given element range is beneficial for improving the cycling stability and specific capacity of the positive electrode active material.

In some embodiments of this application, R may include one or more of the following elements: F and Cl.

Doping the oxygen site in the positive electrode active material $Na_xMn_aCu_bM1_cM2_dM3_eO_{2+f-g}R_g$ with R element within the given range is beneficial for stabilizing oxygen in the positive electrode active material, thereby mitigating structural damage due to lattice oxygen release in the positive electrode active material, enhancing the stability of the positive electrode active material, and further improving the capacity retention rate of the battery. Optionally, R may include the fluorine element, for example, may only include the fluorine element.

It can be understood that the positive electrode active material of this application may include one or more of $Na_xMn_aCu_bFe_dNb_eO_{2+f-g}F_g$, $Na_xMn_aCu_bNi_cFe_dO_{2+f}$, $Na_xMn_aCu_bFe_dO_2$, $Na_xMn_aCu_bLi_cCo_dZr_eO_{2+f}$, $Na_xMn_aCu_b$-$Ni_cCr_dO_2$, and all other positive electrode active materials conforming to the general formula $Na_xMn_aCu_bM1_c M2_d$-$M3_eO_{2+f-g}R_g$. For example, as a specific example, the positive electrode active material may include, but is not limited to, one or more of $Na_{0.94}Mn_{0.45}Cu_{0.15}Ni_{0.25}Fe_{0.15}O_2$, $Na_{0.93}Mn_{0.4}Cu_{0.1}Ni_{0.2}Fe_{0.2}Al_{0.1}O_2$, $Na_{0.94}Mn_{0.45}Cu_{0.1}Zn_{0.05}Ni_{0.2}Fe_{0.15}Al_{0.05}O_2$, $Na_{0.93}Mn_{0.45}Cu_{0.15}Ni_{0.2}Fe_{0.2}Ti_{0.05}O_2$, and $Na_{0.94}Mn_{0.5}Cu_{0.2}Ni_{0.1}Fe_{0.1}Zr_{0.1}O_2$.

In some embodiments of this application, $0.01 \leq \dfrac{b^2 \times (b+c)^2 \times (b+d)}{a \times (a+e)^4} \leq 0.04$ .

As some specific examples, the value of $\dfrac{b^2 \times (b+c)^2 \times (b+d)}{a \times (a+e)^4}$ may be 0.01, 0.015, 0.02, 0.025, 0.03, 0.035, or 0.04, or may be in any range defined by the above values. In the positive electrode active material $Na_xMn_a$-$Cu_bM1_cM2_dM3_eO_{2+f-g}R_g$, Cu, M1, and M2 elements can provide charge compensation during sodium intercalation and deintercalation or activate redox charge compensation of nearby oxygen. However, M1 and M2 elements generally have lower valences, easily inducing the precipitation of CuO. When the value of $\dfrac{b^2 \times (b+c)^2 \times (b+d)}{a \times (a+e)^4}$ is within the given range, it is beneficial for further improving the specific capacity of the positive electrode active material while allowing more Cu to enter the lattice of the layered oxide, effectively stabilizing the structure and improving the cycling stability of the positive electrode active material.

Controlling the value of $\dfrac{b^2 \times (b+c)^2 \times (b+d)}{a \times (a+e)^4}$ to satisfy the given range is beneficial for further improving the specific capacity and cycling stability of the positive electrode active material.

In some embodiments of this application, $0.7 \leq x \leq 1$, optionally $0.8 \leq x \leq 1$.

As some specific examples, in the positive electrode active material $Na_xMn_aCu_bM1_cM2_dM3_eO_{2+f-g}R_g$, the value of x may be 0.7, 0.75, 0.8, 0.85, 0.9, 0.95, or 1, or may be in any range defined by the above values. The value of x satisfying the given range is beneficial for achieving a higher capacity. Optionally, $0.8 \leq x \leq 1$.

In some embodiments of this application, $0.3 \leq a \leq 0.7$, optionally $0.3 \leq a \leq 0.5$.

As some specific examples, in the positive electrode active material $Na_xMn_aCu_bM1_cM2_dM3_eO_{2+f-g}R_g$, the value of a may be 0.3, 0.35, 0.4, 0.45, 0.5, 0.55, 0.6, 0.65, or 0.7, or may be any range defined by the above values. The value of a satisfying the given range is beneficial for reducing the risk of sodium overflow, improving the cycling stability of the positive electrode active material. Optionally, $0.3 \leq a \leq 0.5$.

In some embodiments of this application, $0.05 \leq b \leq 0.2$, optionally $0.1 \leq b \leq 0.15$.

As some specific examples, in the positive electrode active material $Na_xMn_aCu_bM1_cM2_dM3_eO_{2+f-g}R_g$, the value of b may be 0.05, 0.08, 0.1, 0.12, 0.15, 0.18, 0.2, or any range defined by the above values. The value of b satisfying the given range is beneficial for stabilizing the structure of the layered oxide, improving the cycling stability of the positive electrode active material. Optionally, $0.1 \leq b \leq 0.15$.

In some embodiments of this application, $0.1 \leq c \leq 0.3$, optionally $0.15 \leq c \leq 0.25$.

As some specific examples, in the positive electrode active material $Na_xMn_aCu_bM1_cM2_dM3_eO_{2+f-g}R_g$, the value of c may be 0.1, 0.12, 0.15, 0.18, 0.2, 0.2, 0.22, 0.25, 0.28, or 0.3, or any range defined by the above values. The value of c satisfying the given range can provide charge compensation during sodium intercalation and deintercalation or activate redox charge compensation of nearby oxygen while reducing the risk of inducing CuO precipitation, which is beneficial for simultaneously improving the specific capacity and cycling stability of the positive electrode active material. Optionally, $0.15 \leq c \leq 0.25$.

In some embodiments of this application, $0.1 \leq d \leq 0.4$, optionally $0.2 \leq d \leq 0.3$.

As some specific examples, in the positive electrode active material $Na_xMn_aCu_bM1_cM2_dM3_eO_{2+f-g}R_g$, the value of d may be 0.1, 0.12, 0.15, 0.18, 0.2, 0.2, 0.22, 0.25, 0.28, 0.3, 0.32, 0.35, 0.38, or 0.4, or may be in any range defined by the above values. The value of d satisfying the given range can provide charge compensation during sodium intercalation and deintercalation or activate redox charge compensation of nearby oxygen while also reducing the risk of inducing CuO precipitation, which is beneficial for simultaneously improving the specific capacity and cycling stability of the positive electrode active material. Optionally, $0.2 \leq d \leq 0.3$.

In some embodiments of this application, $0 \leq e \leq 0.1$, optionally $0.01 \leq e \leq 0.05$.

As some specific examples, in the positive electrode active material $Na_xMn_aCu_bM1_cM2_dM3_eO_{2+f-g}R_g$, the value of e may be 0.01, 0.02, 0.03, 0.04, 0.05, 0.06, 0.07, 0.08, 0.09, or 0.1, or may be in any range defined by the above values. The value of e satisfying the given range is beneficial for allowing more Cu to enter the layered oxide lattice, stabilizing the structure of the layered oxide, and reducing the amount of CuO impurity phases, improving the specific capacity and cycling stability of the positive electrode active material. Optionally, $0.01 \leq e \leq 0.05$.

In some embodiments of this application, a phase state of the positive electrode active material may include a first phase, with an interlayer spacing of 0.525 nm to 0.545 nm.

In the positive electrode active material $Na_xMn_aCu_bM1_cM2_dM3_eO_{2+f-g}R_g$ of this application, the interlayer spacing of the first phase is defined as a distance between transition metal layers in a direction perpendicular to a (001) crystal plane, which can be obtained through X-ray diffraction test performed on the positive electrode active material. The interlayer spacing of the first phase may be 0.525 nm to 0.545 nm, 0.528 nm to 0.544 nm, 0.532 nm to 0.544 nm, 0.534 nm to 0.542 nm, 0.536 nm to 0.542 nm, 0.538 nm to 0.542 nm, or 0.539 nm to 0.541 nm, or may be in any range defined by the above values. Optionally, the interlayer spacing of the first phase may be 0.53 nm to 0.54 nm. When the interlayer spacing of the first phase satisfies the given range, the sodium-ion amount in the layered oxide is higher, and the positive electrode active material based on such layered oxide has a higher first-cycle Coulombic efficiency. Including the first phase in the phase state of the positive electrode active material $Na_xMn_aCu_bM1_cM2_dM3_eO_{2+f-g}R_g$ is beneficial for improving the first-cycle Coulombic efficiency of the positive electrode active material and the battery. It should be noted that in the first phase described in this application, "first" is used only for descriptive purpose and should not be understood as indicating or implying relative importance or implicitly indicating a quantity of phase states included in the first phase. In this application, the first phase should be understood as a collective term for all phase states in the positive electrode active material $Na_xMn_aCu_bM1_cM2_dM3_eO_{2+f-g}R_g$ that satisfy an interlayer spacing of 0.525 nm to 0.545 nm, for example, the first phase may include, but is not limited to, the O3 phase, and a space group of the first phase may include, but is not limited to, $R\bar{3}m$,

In some embodiments of this application, the phase state of the positive electrode active material may include a second phase, where an interlayer spacing of the second phase is 0.54 nm to 0.57 nm.

In the positive electrode active material $Na_xMn_aCu_bM1_cM2_dM3_eO_{2+f-g}R_g$ of this application, the interlayer spacing of the second phase is defined as a distance between transition metal layers in a direction perpendicular to the (001) crystal plane, which can be obtained through X-ray diffraction test performed on the positive electrode active material. The interlayer spacing of the second phase may be 0.54 nm to 0.57 nm, 0.542 nm to 0.568 nm, 0.544 nm to 0.566 nm, 0.546 nm to 0.562 nm, 0.548 nm to 0.56 nm, 0.55 nm to 0.56 nm, or 0.552 nm to 0.558 nm, or may be in any range defined by the above values. When the interlayer spacing of the second phase satisfies the given range, sodium-ion migration in the layered oxide is faster, resulting in better rate performance. Including the second phase in the phase state of the positive electrode active material $Na_xMn_aCu_bM1_cM2_dM3_eO_{2+f-g}R_g$ is beneficial for improving the rate performance and fast-charge performance of the positive electrode active material and the battery. It should be noted that in the second phase described in this application, "second" is also used only for descriptive purposes and should not be understood as indicating or implying relative importance or implicitly indicating a quantity of phase states included in the second phase. In this application, the second phase should be understood as a collective term for all phase states in the positive electrode active material $Na_xMn_aCu_bM1_cM2_dM3_eO_{2+f-g}R_g$ that satisfy an interlayer spacing of 0.54 nm to 0.57 nm, for example, the second phase may include, but is not limited to, the P2 phase, and a space group of the second phase may include, but is not limited to, $P6_3/mmc$.

Optionally, the phase state of the positive electrode active material $Na_xMn_aCu_bM1_cM2_dM3_eO_{2+f-g}R_g$ may include both the first phase and the second phase, satisfying this condition is beneficial for enabling the positive electrode active material and the battery to have both high first-cycle Coulombic efficiency and high rate performance.

In some embodiments of this application, the phase state of the positive electrode active material may include an O3 phase, with a space group including $R\bar{3}m$, and an interlayer spacing of 0.53 nm to 0.54 nm.

The space group of the positive electrode active material $Na_xMn_aCu_bM1_cM2_dM3_eO_{2+f-g}R_g$ satisfying the O3 phase state may include $R\bar{3}m$, with an interlayer spacing of 0.53 nm to 0.54 nm. The interlayer spacing of the positive electrode active material $Na_xMn_aCu_bM1_cM2_dM3_eO_{2+f-g}R_g$ in the O3 phase can be calculated based on a position of the (003) peak in X-ray diffraction. The positive electrode active material $Na_xMn_aCu_bM1_cM2_dM3_eO_{2+f-g}R_g$ satisfying the O3 phase state has a higher sodium-ion amount, which is beneficial for improving the first-cycle Coulombic efficiency of the positive electrode active material and the battery.

In some embodiments of this application, the phase state of the positive electrode active material may include a P2 phase, with a space group including $P6_3/mmc$, and an interlayer spacing of 0.54 nm to 0.57 nm.

The space group of the positive electrode active material $Na_xMn_aCu_bM1_cM2_dM3_eO_{2+f-g}R_g$ satisfying the P2 phase state may include $P6_3/mmc$, with an interlayer spacing of 0.54 nm to 0.57 nm. The interlayer spacing of the positive electrode active material $Na_xMn_aCu_bM1_cM2_dM3_eO_{2+f-g}R_g$ in the P2 phase can be calculated based on a position of the (002) peak in X-ray diffraction. The positive electrode active material $Na_xMn_aCu_bM1_cM2_dM3_eO_{2+f-g}R_g$ satisfying the P2 phase state allows faster sodium-ion migration, which is beneficial for improving the rate performance and fast-charge performance of the positive electrode active material and the battery.

Optionally, the phase state of the positive electrode active material $Na_xMn_aCu_bM1_cM2_dM3_eO_{2+f-g}R_g$ may include both the O3 phase and the P2 phase, satisfying this condition is beneficial for enabling the positive electrode active material and the battery to have both high first-cycle Coulombic efficiency and high rate performance. Including both the O3 phase and the P2 phase in the positive electrode active material not only enables the positive electrode active material and the battery to have high first-cycle Coulombic efficiency and good rate performance but also results in slight stress caused by the interface contact between the O3 and P2 phases, forming an interlocking effect, which can create a synergistic effect between the O3 and P2 phases, enhancing structural stability and improving the cycling stability of the positive electrode active material and the battery.

In some embodiments of this application, the phase state of the positive electrode active material may include both the O3 phase and the P2 phase, and a mass ratio of the positive electrode active material in the O3 phase state to the positive electrode active material in the P2 phase state is (1 to 10): 1.

For example, the mass ratio of the positive electrode active material $Na_xMn_aCu_bM1_cM2_dM3_eO_{2+f-g}R_g$ in the O3 phase state to the positive electrode active material $Na_xMn_aCu_bM1_cM2_dM3_eO_{2+f-g}R_g$ in the P2 phase state may be 1/1, 2/1, 3/1, 4/1, 5/1, 6/1, 7/1, 8/1, 9/1, or 10/1, or may be in any range defined by the above values. The mass ratio of the O3 and P2 phases can be obtained by first determining the respective elemental compositions of the O3 and P2 phases with transmission electron microscopy and energy-dispersive spectroscopy, and then performing calculation based on a bulk elemental composition obtained from ICP test of the sample. Ensuring that the amounts of the O3 and P2 phases in the positive electrode active material satisfies the given range requirements is beneficial for further leveraging the synergistic effect of the O3 and P2 phases, enabling the positive electrode active material and the battery to have good first-cycle Coulombic efficiency, rate performance, and cycling stability.

In some embodiments of this application, the phase state, interlayer spacing of crystal plane, and space group of the positive electrode active material can be tested according to the following method: In a dry room or glovebox, a sample is ground finely in an agate mortar and filtered with a 350-mesh sieve. An appropriate amount of the sieved sample is placed in a groove of a sample holder, and the loose sample powder is slightly above a plane of the sample holder. A glass slide lightly presses the sample surface to level the powder to be flush with the frame plane, and excess powder is scraped off. After sample preparation, a Bruker D8A_A25 X-ray powder diffractometer from Germany Bruker AxS is used for test with $CuK_\alpha$ radiation, a wavelength À of 1.5406 Å, a 20 angle scanning range of 5° to 60°, and a scanning rate of 4°/min. After the test, the interlayer spacing (for example, $d_{003}$) of a selected crystal plane (for example, 003 crystal plane) is calculated using the Bragg equation $2d \cdot \sin\theta = \lambda$ and based on the corresponding angle of the selected crystal plane (for example, 003 crystal plane), where the selected crystal plane (for example, 003 crystal plane) includes three transition metal layers per unit cell. The space group of the sample is determined by comparing the XRD diffraction peak of the sample with standard cards in XRD analysis software. It should be noted that for phases such as O3, O3', P3, and the like, the 003 crystal plane can be used, while for phases such as P2, 02, O2', and the like, the 002 crystal plane can be used, generally with $2\theta$ angle peaks within 15° to 17°, representing the first-order diffraction of the transition metal layer/sodium layer to X-ray in the layered oxide.

In some embodiments of this application, a particle size $D_v50$ of the positive electrode active material may be 2 $\mu$m to 30 $\mu$m.

For example, the particle size $D_v50$ of the positive electrode active material may be 2 $\mu$m, 5 $\mu$m, 8 $\mu$m, 10 $\mu$m, 12 $\mu$m, 15 $\mu$m, 18 $\mu$m, 20 $\mu$m, 22 $\mu$m, 25 $\mu$m, 28 $\mu$m, or 30 $\mu$m, or may be in any range defined by the above values. In this application, $D_v50$ refers to the particle size corresponding to a cumulative volume-based distribution percentage of 50%, which can be measured, for example, according to the standard GB/T 19077-2016/ISO 13320:2009 using a laser particle size analyzer (Malvern Master Size 2000). The specific test process may include: adding an appropriate amount of sample (ensuring a sample concentration with obscuration of 8% to 12%) into 20 ml of deionized water, and performing ultrasonic treatment for 5 min (53 kHz/120 W) to ensure complete dispersion of the sample, followed by measurement according to the standard GB/T 19077-2016/ISO 13320:2009. Optionally, the particle size $D_v50$ of the positive electrode active material may be 4 $\mu$m to 12 $\mu$m.

In some embodiments of this application, a specific surface area of the positive electrode active material may be 0.1 $m^2$/g to 2 $m^2$/g.

For example, the specific surface area of the positive electrode active material may be 0.1 $m^2$/g, 0.2 $m^2$/g, 0.5 $m^2$/g, 0.8 $m^2$/g, 1 $m^2$/g, 1.2 $m^2$/g, 1.5 $m^2$/g, 1.8 $m^2$/g, or 2 $m^2$/g, or may be in any range defined by the above values. In this application, the specific surface area of the positive electrode active material can be measured using conventional methods in the art, for example, nitrogen physisorption; and for another example, the BET (specific surface area) data of the positive electrode active material can be obtained using a U.S. Micromeritics Gemini VII 2390 multi-station automatic specific surface area and pore analyzer. Optionally, the specific surface area of the positive electrode active material may be 0.3 $m^2$/g to 1 $m^2$/g.

In some embodiments of this application, a compacted density of the positive electrode active material under a pressure of 300 MPa may be 3 g/$cm^3$ to 5 g/$cm^3$.

For example, the compacted density of the positive electrode active material under a pressure of 8 tons may be 3 g/$cm^3$, 3.2 g/$cm^3$, 3.4 g/$cm^3$, 3.6 g/$cm^3$, 3.8 g/$cm^3$, 4 g/$cm^3$, 4.2 g/$cm^3$, 4.4 g/$cm^3$, 4.6 g/$cm^3$, 4.8 g/$cm^3$, or 5 g/$cm^3$, or may be in any range defined by the above values. In this application, the compacted density of the positive electrode active material under a pressure of 300 MPa can be measured using well-known devices and methods in the art, for example, using an electronic pressure testing machine, such as the UTM 7305 electronic pressure testing machine. Optionally, the compacted density of the positive electrode active material under a pressure of 300 MPa may be 3.0 g/$cm^3$ to 4.0 g/$cm^3$.

Specifically, when at least one of the $D_v50$, specific surface area, and compacted density under 300 MPa pressure of the positive electrode active material of this application falls within the above ranges, a conduction distance within the positive electrode active material is short, and surface side reactions are minimal, promoting the capacity per gram of the positive electrode active material and enhancing the capacity retention rate of the battery containing the material.

A second aspect of this application provides a method for preparing the positive electrode active material of the first aspect of this application, including roasting raw material components including a sodium source, a manganese source, and a copper source.

For example, the raw material components can be mixed and roasted according to a preset stoichiometric ratio to obtain a positive electrode active material containing $Na_xMn_aCu_bM1_cM2_dM3_eO_{2+f-g}R_g$. It should be noted that the process parameters for roasting the raw material components are not particularly limited, and persons skilled in the art can flexibly make selections according to actual needs. Additionally, it should be noted that due to the loss of the sodium source during roasting, the amount of added sodium source may be slightly higher than a required sodium amount in a composition of an expected positive electrode active material.

The method for preparing the positive electrode active material of the second aspect of this application has at least the following beneficial effects: the process is simple, and the manganese and copper elements are used to improve electrochemical performance of the positive electrode active material.

In some embodiments of this application, the sodium source, manganese source, and copper source may each independently include one or more of an oxide, a hydroxide, a carbonate, and a bicarbonate.

When preparing the positive electrode active material including $Na_xMn_aCu_bM1_cM2_dM3_eO_{2+f-g}R_g$, the forms and specific types of the sodium source, manganese source, and copper source are not particularly limited, and persons skilled in the art can flexibly make selections according to actual needs, as long as the corresponding sodium, manganese, and copper elements can be provided for the positive electrode active material. Conventional materials in the art may be used, for example, the sodium source, manganese source, and copper source can be provided in the form of oxides or precursors that can form the corresponding oxides. The sodium source is used as an example. The sodium source may include, but is not limited to, at least one of sodium oxide, sodium hydroxide, sodium carbonate, and sodium bicarbonate.

Similarly, the manganese source and copper source may each independently include, but are not limited to, one or more of an oxide, a hydroxide, a carbonate, and a bicarbonate. Optionally, providing the sodium source, manganese source, and copper source in the given types is beneficial for obtaining the positive electrode active material $Na_xMn_aCu_bM1_cM2_{d-}M3_eO_{2+f-g}R_g$ through mixed roasting, facilitates the regulation of the proportions of the components, and the raw material components are widely available and easily obtainable.

In some embodiments of this application, the raw material components may further include one or more of an M1 source, an M2 source, and an M3 source, optionally, the M1 source, M2 source, and M3 source each independently include one or more of an oxide, a hydroxide, a carbonate, and a bicarbonate.

The performance of the positive electrode active material can be improved by doping one or more of M1, M2, and M3 into the positive electrode active material containing the sodium, manganese, and copper elements, for example, by adjusting the element selection and doping amounts of M1, M2, and M3, as well as their stoichiometric relationships with the corresponding elements in other raw material components, to increase the Cu element in the lattice of the positive electrode active material $Na_xMn_aCu_bM1_cM2_dM3_eO_{2+f-g}R$, reduce the CuO impurity phases, and improve the specific capacity while improving the cycling stability of the positive electrode active material. The optional element ranges for M1, M2, and M3 have been detailed in the foregoing sections and are not repeated herein. The M1 source, M2 source, and M3 source can be conventional materials in the art, and their forms may each independently include, but are not limited to, an oxide, a hydroxide, a carbonate, and a bicarbonate, which is beneficial for obtaining the positive electrode active material $Na_xMn_aCu_bM1_cM2_dM3_eO_{2+f-g}R$ through mixed roasting, facilitates the regulation of the proportions of the components, and the raw material components are widely available and easily obtainable.

In some embodiments of this application, before roasting the raw material components, the method may further include: grinding and/or ball milling the raw material components to improve the mixing uniformity and roasting efficiency of the raw material components. For example, as some specific examples, the raw material components can be mixed, ground, and/or ball-milled, then placed in an open crucible, heated in a muffle furnace to 800°C to 1200°C at a heating rate of 3°C/min to 8°C/min, maintained at a constant temperature of 900°C to 1000°C for 12 h to 17 h, and naturally cooled to obtain the positive electrode active material.

A third aspect of this application provides a positive electrode plate, including the positive electrode active material of the first aspect of this application, or the positive electrode active material prepared by the method of the second aspect of this application.

In a battery, the positive electrode plate typically includes a positive electrode current collector and a positive electrode active material layer disposed on the positive electrode current collector, where the positive electrode active material layer includes the positive electrode active material.

The positive electrode current collector may be a conventional metal foil or a composite current collector (for example, a metal material can be disposed on a polymer substrate to form a composite current collector). As an example, the positive electrode current collector may include at least one of copper foil, aluminum foil, nickel foil, stainless steel foil, stainless steel mesh, and carbon-coated aluminum foil.

The positive electrode active material layer may optionally further include one or more of a binder, a conductive agent, and other optional additives. As an example, the conductive agent may include, but is not limited to, one or more of superconducting carbon, acetylene black, carbon black, Ketjen black, carbon dots, carbon nanotubes, graphene, and carbon nanofibers. As an example, the binder may include, but is not limited to, one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

These materials are all commercially available.

A fourth aspect of this application provides a battery, including the positive electrode plate of the third aspect of this application, the positive electrode active material prepared by using the method of the second aspect of this application, or the positive electrode active material of the first aspect of this application. Thus, the battery can have good cycling stability and specific capacity.

A battery refers to a reusable battery with an active material reactivated through charging after being discharged.

It can be understood that the battery proposed in this application is a sodium-ion battery.

Typically, a battery includes a positive electrode plate, a negative electrode plate, a separator, and an electrolyte. During charge and discharge of the battery, active ions intercalate and deintercalate back and forth between the positive electrode plate and the negative electrode plate. The separator is disposed between the positive electrode plate and the negative electrode plate to provide isolation. The electrolyte serves to conduct ions between the positive electrode plate and the negative electrode plate.

[Negative electrode plate]

In a battery, the negative electrode plate typically includes a negative electrode current collector and a negative electrode active material layer disposed on the negative electrode current collector, where the negative electrode active material layer includes a negative electrode active material. The negative electrode current collector may be a conventional metal foil or a composite current collector (for example, a metal material may be disposed on a polymer substrate to form a composite current collector). As an example, the negative electrode current collector may be a copper foil.

In some embodiments of this application, the battery of the fourth aspect of this application may be a lithium-ion battery. In this case, a specific type of negative electrode active material is not limited and may be any known active material suitable for the negative electrode of a sodium-ion battery, and persons skilled in the art can make selections according to actual needs. For example, the negative electrode active material may include, but is not limited to, at least one of a sodium metal, carbon material, alloy material, transition metal oxide and/or sulfide, phosphorus-based material, and titanate material. Specifically, the carbon material may include at least one of hard carbon, soft carbon, amorphous carbon, and nanostructured carbon materials; the alloy material may include an alloy material formed from at least one of Si, Ge, Sn, Pb, and Sb; a general formula for the transition metal oxide and sulfide is $M_xN_y$, where M includes at least one of Fe, Co, Ni, Cu, Mn, Sn, Mo, Sb, and V, and N includes O or S; the phosphorus-based material may include at least one of red phosphorus, white phosphorus, and black phosphorus; and the titanate material may include at least one of $Na_2Ti_3O_7$, $Na_2Ti_6O_{13}$, $Na_4Ti_5O_{12}$, $Li_4Ti_5O_{12}$, and $NaTi_2(PO_4)_3$. These materials are all commercially available.

Typically, the negative electrode active material layer further optionally includes a binder and a conductive agent, where the conductive agent is used to enhance the conductivity of the negative electrode active material layer, and the binder is used to firmly bond the negative electrode active material and the binder to the negative electrode current collector. This application does not specifically limit the types of conductive agent and binder, which can be selected according to actual needs. For example, the conductive agent may include at least one of superconducting carbon, acetylene black, carbon black, Ketjen black, carbon dots, carbon nanotubes, graphene, and carbon nanofibers. For example, the binder may include at least one of styrene-butadiene rubber (SBR), styrene-butadiene copolymers (SBCs), water-based acrylic resin (water-based acrylic resin), and carboxymethyl cellulose (CMC).

The negative electrode active material layer may further optionally include a thickener, such as carboxymethyl cellulose (CMC). However, this application is not limited thereto, and other materials that can be used as thickeners for negative electrode plate of sodium-ion batteries can also be used.

In some embodiments of this application, the battery of the fourth aspect of this application may be a sodium metal battery. In this case, the negative electrode active material may include, but is not limited to, elemental sodium metal. For example, the negative electrode active material may alternatively be an alloy of sodium metal with various other metal or non-metal elements.

In some embodiments of this application, the battery of the fourth aspect of this application may also be an anode-free sodium metal battery. In this case, the negative electrode is formed only by a metal foil current collector without sodium metal on a surface. During cycling, only sodium from the positive electrode is used, which deposits and strips as sodium metal on the negative electrode side.

[Electrolyte]

The electrolyte may include an electrolyte salt and a solvent.

As an example, the electrolyte sodium salt may include one or more of sodium hexafluorophosphate, sodium difluorooxalatoborate, sodium tetrafluoroborate, sodium bis(oxalate)borate, sodium perchlorate, sodium hexafluoroarsenate, sodium bis(fluorosulfonyl)imide, sodium trifluoromethanesulfonate, or sodium bis(trifluoromethanesulfonyl) imide.

As an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), or diethyl sulfone (ESE).

In some embodiments, the electrolyte may further include additives. For example, the additives may include a negative electrode film-forming additive, a positive electrode film-forming additive, and an additive that improves certain battery performance, such as an additive that improves overcharge performance, high-temperature performance, or low-temperature performance of the battery.

[Separator]

The separator is not particularly limited in this application, and any well-known porous structure separator with electrochemical and mechanical stability can be used according to actual needs. For example, the separator may include a single-layer or multi-layer film containing at least one of glass fiber, non-woven fabric, polyethylene, polypropylene, and polyvinylidene fluoride.

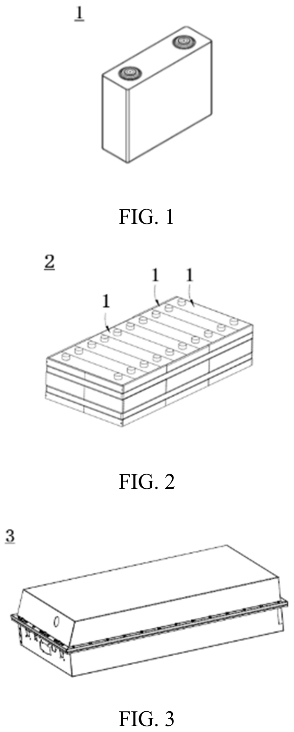

A shape of the battery is not particularly limited in the embodiments of this application, and may be cylindrical, prismatic, or any other shape. FIG. 1 shows a battery 1 with a prismatic structure as an example.

In some embodiments, the battery may include a packaging. The packaging is used to encapsulate the positive electrode plate, negative electrode plate, and electrolyte.

In some embodiments, the packaging may include a housing and a cover plate. The housing may include a bottom plate and a side plate connected to the bottom plate, with the bottom plate and side plate enclosing a receiving cavity. The housing has an opening communicating with the receiving cavity, and the cover plate can cover the opening to seal the receiving cavity.

The positive electrode plate, negative electrode plate, and separator can be formed into an electrode assembly through winding or lamination. The electrode assembly is encapsulated in the receiving cavity. One or several electrode assemblies may be contained in the battery. This can be adjusted according to needs.

In some embodiments, the packaging of the battery may include a hard shell, such as a hard plastic shell, aluminum shell, or steel shell.

The packaging of the battery may also include a soft pack, such as a pouch. A material of the soft pack may be plastic, for example, including at least one of polypropylene (PP), polybutylene terephthalate (PBT), and polybutylene succinate (PBS).

In some embodiments, the battery may be a single battery cell or may be a battery module or battery pack formed by battery cells. A plurality of batteries may be included in the battery module or battery pack, and a specific quantity can be adjusted according to the application and capacity of the battery module.

FIG. 2 shows a battery module 2 as an example. Refer to FIG. 2. In the battery module 2, multiple batteries 1 may be sequentially arranged along a length direction of the battery module 2. Certainly, the batteries may alternatively be arranged in any other manner. Further, the multiple batteries 1 may be fixed by fasteners.

The battery module 2 may also include a housing with an accommodating space, and the multiple batteries 1 are accommodated in the accommodating space. In some embodiments, the aforementioned battery module may alternatively be assembled into a battery pack. The quantity of battery modules included in the battery pack can be adjusted according to the application and capacity of the battery pack.

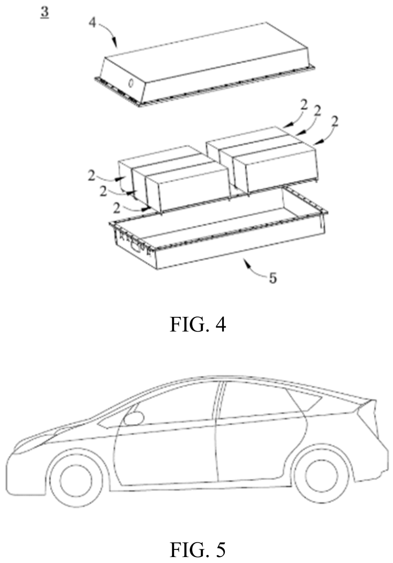

FIG. 3 and FIG. 4 show an example battery pack 3. Refer to FIG. 3 and FIG. 4. The battery pack 3 may include a battery case and multiple battery modules 2 disposed within the battery case. The battery case includes an upper case 4 and a lower case 5, where the upper case 4 can cover the lower case 5 to form a closed space for accommodating the battery modules 2. The multiple battery modules 2 can be arranged in the battery case in any manner.

A fifth aspect of this application provides an electric apparatus, including the battery described in the fourth aspect of this application.

Specifically, the battery can serve as a power source for the electric apparatus or as an energy storage unit for the electric apparatus. The electric apparatus may include, but is not limited to, mobile devices (for example, mobile phones and laptops), electric vehicles (for example, pure electric vehicles, hybrid electric vehicles, plug-in hybrid electric vehicles, electric bicycles, electric scooters, electric golf carts, and electric trucks), electric trains, ships, satellites, and energy storage systems.

FIG. 5 shows an example electric apparatus. The electric apparatus includes a pure electric vehicle, a hybrid electric vehicle, or a plug-in hybrid electric vehicle. For another example, the electric apparatus may include a mobile phone, tablet, or laptop. Such electric devices typically need to be light and thin, and can use the battery as a power source.

The following describes the examples of this application. The examples described below are illustrative and merely used to explain this application, and should not be construed as limitations on this application. Where specific techniques or conditions are not specified in the examples, the examples are performed according to techniques or conditions described in the literature in the field or according to product specifications. Reagents or instruments used without indicating the manufacturer are conventional products commercially available.

**Example 1**

(I) Battery preparation

(1) Preparation of sodium-ion battery positive electrode active material

$Na_2CO_3$, $Mn_2O_3$, $CuO$, $NiO$, $Fe_2O_3$, and $TiO_2$ were weighed and mixed. An obtained sample was pre-ground in an agate mortar and then ball-milled in a planetary ball mill for 1 h to obtain a precursor mixture. The precursor mixture was evenly placed in an open crucible, then heated in a muffle furnace at a temperature rise velocity of 5°C/min from room temperature to 950°C and maintained at the constant temperature for 15 h, followed by natural cooling, to obtain the positive electrode active material $Na_{0.86}Mn_{0.4}Cu_{0.11}Ni_{0.19}Fe_{0.28}Ti_{0.02}O_2$. The metal composition was tested using inductively coupled plasma emission spectroscopy.

(2) Preparation of positive electrode plate

The positive electrode active material $Na_{0.86}Mn_{0.4}Cu_{0.11}Ni_{0.19}Fe_{0.28}Ti_{0.02}O_2$, conductive agent carbon black (Super P), and binder polyvinylidene fluoride (PVDF) were thoroughly mixed in a mass ratio of 80:15:5 in an appropriate amount of solvent NMP to form a uniform positive electrode slurry. The positive electrode slurry was evenly applied on a surface of an aluminum foil positive electrode current collector, dried, cold-pressed, and punched into a disc with a diameter of 14 mm to obtain the positive electrode plate.

(3) Preparation of negative electrode plate: The negative electrode plate was made of a metal sodium disc.

(4) Preparation of electrolyte: Ethylene carbonate (EC), diethyl carbonate (DEC), and the like were mixed in equal volumes to obtain an organic solvent, and $NaClO_4$ was dissolved in the organic solvent to prepare an electrolyte with a concentration of 1 mol/L.

(5) Separator: A porous polyethylene film was used as the separator.

(6) Preparation of button battery

The positive electrode plate, separator, and negative electrode plate were stacked in order, with the separator placed between the positive and negative electrode plates for isolation. The prepared electrolyte was added. In this way, the button battery was prepared.

Examples 2 to 13 and Comparative examples 1 and 2

Examples 2 to 13 and Comparative examples 1 and 2 differed from Example 1 in the composition of the raw material components and molar ratios of corresponding elements used in preparing the positive electrode active material, resulting in different compositions of the positive electrode active materials (refer to Table 2 for details). The positive electrode active materials prepared in Examples 2 to 13 and Comparative examples 1 and 2 all satisfied the general formula $Na_xMn_aCu_bM1_cM2_aM3_eO_2$. ZnO was used as the Zn source, $ZrO_2$ as the Zr source, and $Al_2O_3$ as the Al source.

(II) Test methods

(a) Inductively coupled plasma emission spectroscopy for positive electrode active material element composition

For the instrument standard, reference should be made to EPA6010D-2014 "Inductively coupled plasma-atomic emission spectrometry". The positive electrode active material sample was chemically digested into a solution, atomized into a plasma to excite characteristic spectral lines from the elements. Element amounts were qualitatively and quantitatively analyzed based on wavelengths and intensities (proportional to concentration) of the spectral lines.

(b) Test of capacity retention rate after 50 cycles of button battery

At 25°C, the battery was charged at a constant current density of 10 mA/g to 4.2 V, and then discharged at a constant current density of 10 mA/g to 2 V to obtain a discharge specific capacity $C_0$ of the button battery. Subsequently, the battery underwent 50 charge-discharge cycles at a constant current density of 10 mA/g, with a discharge specific capacity after 50 cycles recorded as $C_1$, where a capacity retention rate after 50 cycles = $C_1/C_0 \times 100\%$.

(c) Button battery specific capacity test

At 25°C, the button battery was charged at a rate of 0.1C to 4.2 V, then discharged at a rate of 0.1C to 1.5 V to obtain the battery specific capacity, with a nominal specific capacity of 140 mAh/g.

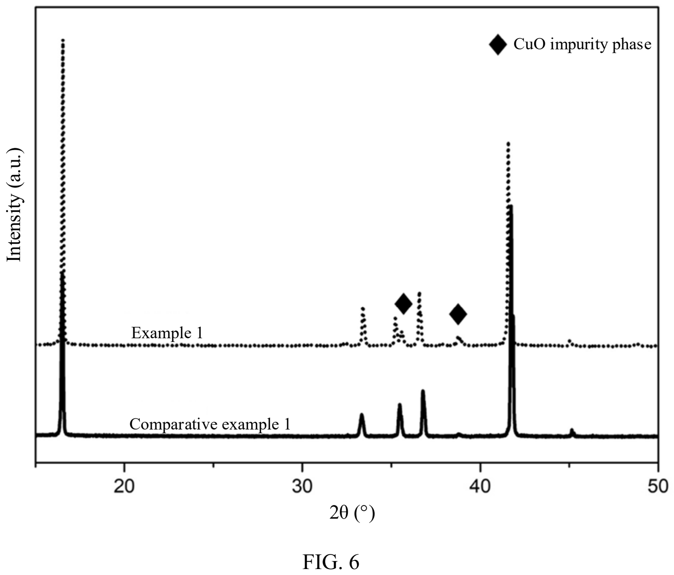

Relevant tests were conducted in Examples 1 to 13 and Comparative examples 1 and 2. Results were shown in FIG. 6 and Table 1.

**Table 1 Composition of positive electrode active materials $Na_xMn_aCu_bM1_cM2_dM3_eO_2$ prepared in Examples 1 to 13 and Comparative examples 1 and 2, and button battery test results**

| Project | x (Na) | a (Mn) | b (Cu) | M1 | c | M2 | d | M3 | e | $\dfrac{b^2\times(b+c)^2\times(b+d)}{a\times(a+e)^4}$ | Discharge specific capacity (mAh/g) | Capacity retention rate after 50 cycles (%) |
|---|---|---|---|---|---|---|---|---|---|---|---|---|
| Example 1 | 0.86 | 0.4 | 0.11 | Ni | 0.19 | Fe | 0.28 | Ti | 0.02 | 0.0341 | 144 | 87 |
| Example 2 | 0.85 | 0.45 | 0.1 | Ni 0.2 / Zn 0.05 | 0.25 | Fe | 0.18 | Ti | 0.02 | 0.0156 | 146 | 94 |
| Example 3 | 0.88 | 0.4 | 0.1 | Ni | 0.2 | Fe | 0.28 | Ti | 0.02 | 0.0275 | 148 | 90 |
| Example 4 | 0.82 | 0.5 | 0.1 | Ni | 0.2 | Fe | 0.18 | Ti | 0.02 | 0.0069 | 140 | 88 |
| Example 5 | 0.89 | 0.5 | 0.05 | Ni | 0.25 | Fe | 0.18 | Ti | 0.02 | 0.0014 | 141 | 89 |
| Example 6 | 0.81 | 0.45 | 0.15 | Ni | 0.2 | Fe | 0.15 | Zr | 0.05 | 0.0294 | 150 | 97 |
| Example 7 | 0.85 | 0.5 | 0.2 | Ni | 0.1 | Fe | 0.1 | Ti | 0.1 | 0.0167 | 143 | 96 |
| Example 8 | 0.89 | 0.45 | 0.13 | Ni 0.15 / Li 0.05 | 0.2 | Fe 0.15 / Cr 0.05 | 0.2 | Mo | 0.02 | 0.0277 | 155 | 92 |
| Example 9 | 0.82 | 0.45 | 0.13 | Ni 0.15 / Mg 0.05 | 0.2 | Fe 0.15 / Al 0.05 | 0.2 | Ti | 0.02 | 0.0277 | 148 | 88 |
| Example 10 | 0.85 | 0.45 | 0.13 | Ni 0.15 / Zn 0.05 | 0.2 | Fe 0.15 / Co 0.05 | 0.2 | Zr | 0.02 | 0.0277 | 150 | 94 |
| Example 11 | 0.86 | 0.45 | 0.13 | Ni | 0.2 | Fe 0.15 / Cr 0.05 | 0.2 | Ti | 0.02 | 0.0277 | 146 | 92 |
| Example 12 | 0.86 | 0.45 | 0.13 | Ni | 0.2 | Fe 0.15 / Al 0.05 | 0.2 | Ti | 0.02 | 0.0277 | 151 | 91 |
| Example 13 | 0.87 | 0.45 | 0.13 | Ni | 0.2 | Fe 0.15 / Co 0.05 | 0.2 | Ti | 0.02 | 0.0277 | 149 | 87 |
| Comparative example 1 | 0.81 | 0.35 | 0.13 | Ni | 0.1 | Fe | 0.4 | Ti | 0.02 | 0.0722 | 105 | 82 |
| Comparative example 2 | 0.86 | 0.48 | 0.22 | Ni | 0 | Fe | 0.3 | Ti | 0 | 0.0478 | 98 | 83 |

Results and conclusions

FIG. 6 is an XRD comparison diagram of the positive electrode active materials prepared in Example 1 and Comparative example 1. With reference to Example 1, Comparative example 1, and FIG. 6, it can be learned that with a Cu component amount of 0.15, the positive electrode active material prepared in Example 1 of this application has an extremely low CuO impurity phase amount, whereas Comparative example 1 has a higher CuO impurity phase amount. Further, with reference to Examples 1 to 13, Comparative examples 1 and 2, and Table 1, it is learned that applying the positive electrode active materials prepared in the above examples of this application to batteries can achieve better cycling stability and discharge specific capacity. The reason may be that in the positive electrode active materials prepared in this application, Cu incorporation into the lattice is facilitated by adjusting element proportions, reducing CuO impurity phase amount. Furthermore, combining Examples 8 to 13, it can be learned that when the value range of

$$\frac{b^2 \times (b+c)^2 \times (b+d)}{a \times (a+e)^4}$$

are satisfied, even the types of M1 and M2 elements are changed, good cycling stability and discharge specific capacity can still be achieved.

Finally, it should be noted that the above embodiments are only used to illustrate the technical solutions of this application and not to limit the technical solutions. Although this application is described in detail with reference to the foregoing embodiments, persons of ordinary skill in the art should understand that modifications can still be made to the technical solutions described in the foregoing embodiments, or equivalent replacements can be made to some or all of the technical features. Such modifications or replacements do not cause the essence of the corresponding technical solutions to depart from the scope of the technical solutions of the embodiments of this application, and they should all be encompassed within the scope of the claims and specification of this application. In particular, as long as there is no structural conflict, the technical features mentioned in the embodiments can be combined in any manner. This application is not limited to the specific embodiments disclosed herein but includes all technical solutions falling within the scope of the claims.

**Claims**

1. A positive electrode active material, comprising:

$$Na_xMn_aCu_bM1_cM2_dM3_eO_{2+f-g}R_g,$$

wherein M1 comprises an element capable of forming a cation with a valence of +2 or less, M2 comprises an element capable of forming a cation with a valence of +3, M3 comprises an element capable of forming a cation with a valence of +4 or higher, R comprises a Group VIIA element, $0.67 \le x \le 1.2$, $a+b+c+d+e=1$, $a>0$, $b>0$, $c\ge0$, $d\ge0$, $e\ge0$, $-0.1\le f \le 0.1$, $0 \le g \le 0.05$, and $\dfrac{b^2 \times (b+c)^2 \times (b+d)}{a \times (a+e)^4} \le 0.04$ .

2. The positive electrode active material according to claim 1, wherein one or more of the following conditions are satisfied:

   M1 comprises one or more of the following elements: Li, K, Mg, Ca, Zn, and Ni;
   M2 comprises one or more of the following elements: Cr, Al, B, Fe, Co, In, Y, La, and Bi;
   M3 comprises one or more of the following elements: Ti, Zr, Nb, Mo, W, Sn, Sb, Si, and Ce; and
   R comprises one or more of the following elements: F and Cl.

3. The positive electrode active material according to claim 1 or 2, wherein one or more of the following conditions are satisfied:

   M1 comprises Ni; and
   M2 comprises one or more of the following elements: Cr, Fe, and Co.

4. The positive electrode active material according to any one of claims 1 to 3, wherein

$$0.01 \leq \frac{b^2 \times (b+c)^2 \times (b+d)}{a \times (a+e)^4} \leq 0.04$$

5. The positive electrode active material according to any one of claims 1 to 4, wherein one or more of the following conditions are satisfied:

$$0.7 \leq x \leq 1;$$

$$0.3 \leq a \leq 0.7;$$

$$0.05 \leq b \leq 0.2;$$

$$0.1 \leq c \leq 0.3;$$

$$0.1 \leq d \leq 0.4;$$

and

$$0 \leq e \leq 0.1.$$

6. The positive electrode active material according to any one of claims 1 to 5, wherein one or more of the following conditions are satisfied:

$$0.8 \leq x \leq 1;$$

$$0.3 \leq a \leq 0.5;$$

$$0.1 \leq b \leq 0.15;$$

$$0.15 \leq c \leq 0.25;$$

$$0.2 \leq d \leq 0.3;$$

and

$$0.01 \leq e \leq 0.05.$$

7. The positive electrode active material according to any one of claims 1 to 6, wherein a phase state of the positive electrode active material comprises a first phase, and an interlayer spacing of the first phase is 0.525 nm to 0.545 nm.

8. The positive electrode active material according to any one of claims 1 to 7, wherein the phase state of the positive electrode active material comprises a second phase, and an interlayer spacing of the second phase is 0.54 nm to 0.57 nm.

9. The positive electrode active material according to any one of claims 1 to 8, wherein the phase state of the positive electrode active material comprises an O3 phase, a space group comprises R$\overline{3}$m, and an interlayer spacing is 0.53 nm to 0.54 nm; and/or the phase state of the positive electrode active material comprises a P2 phase, a space group comprises P6$_3$/mmc, and an interlayer spacing is 0.54 nm to 0.57 nm.

10. The positive electrode active material according to claim 9, wherein the phase state of the positive electrode active material comprises both the O3 phase and the P2 phase, and a mass ratio of the positive electrode active material in the O3 phase state to the positive electrode active material in the P2 phase state is (1 to 10):1.

11. The positive electrode active material according to any one of claims 1 to 10, wherein one or more of the following conditions are satisfied:

a volume particle size distribution $D_v50$ of the positive electrode active material is 2 $\mu$m to 30 $\mu$m;
a specific surface area of the positive electrode active material is 0.1 $m^2/g$ to 2 $m^2/g$; and
a compacted density of the positive electrode active material under a pressure of 300 MPa is 3 $g/cm^3$ to 5 $g/cm^3$.

12. A method for preparing the positive electrode active material according to any one of claims 1 to 11, comprising:
roasting raw material components comprising a sodium source, a manganese source, and a copper source.

13. The method according to claim 12, wherein one or more of the following conditions are satisfied:

the sodium source, the manganese source, and the copper source each independently comprise one or more of an oxide, a hydroxide, a carbonate, and a bicarbonate; and
the raw material components further comprise one or more of an M1 source, an M2 source, and an M3 source.

14. The method according to claim 13, wherein the M1 source, M2 source, and M3 source each independently comprise one or more of an oxide, a hydroxide, a carbonate, and a bicarbonate.

15. A positive electrode plate, comprising the positive electrode active material according to any one of claims 1 to 11, or the positive electrode active material prepared based on the method according to any one of claims 12 to 14.

16. A battery, comprising the positive electrode plate according to claim 15, the positive electrode active material prepared based on the method according to any one of claims 12 to 14, or the positive electrode active material according to any one of claims 1 to 11.

17. An electric apparatus, comprising the battery according to claim 16.

FIG. 1

FIG. 2

FIG. 3

FIG. 4

FIG. 5

FIG. 6

## INTERNATIONAL SEARCH REPORT

| International application No. |
|---|
| **PCT/CN2024/074905** |

**A.      CLASSIFICATION OF SUBJECT MATTER**

H01M4/505(2010.01)i

According to International Patent Classification (IPC) or to both national classification and IPC

**B.      FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, ENTXTC, DWPI: 正极, 钠, 铜, 晶格, 循环, 杂项, 杂质相, 比容量, O3, P2, ositive electrode, sodium, copper, lattice, impurity phase, capacity

**C.      DOCUMENTS CONSIDERED TO BE RELEVANT**

| Category* | Citation of document, with indication, where appropriate, of the relevant passages | Relevant to claim No. |
|---|---|---|
| X | CN 116190633 A (HINA BATTERY TECHNOLOGY CO., LTD.) 30 May 2023 (2023-05-30) paragraphs [0022]-[0099] | 1-9 and 11-17 |
| Y | CN 116190633 A (HINA BATTERY TECHNOLOGY CO., LTD.) 30 May 2023 (2023-05-30) paragraphs [0022]-[0099] | 10 |
| Y | CN 116207359 A (CHINA UNIVERSITY OF MINING AND TECHNOLOGY) 02 June 2023 (2023-06-02) claim 1 | 10 |
| A | CN 111435742 A (NINGDE CONTEMPORARY AMPEREX TECHNOLOGY CO., LTD.) 21 July 2020 (2020-07-21) entire document | 1-17 |
| A | CN 115911332 A (SHANGHAI XUANYI NEW ENERGY DEVELOPMENT CO., LTD.) 04 April 2023 (2023-04-04) entire document | 1-17 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 April 2024** | **09 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/074905**

| C. | DOCUMENTS CONSIDERED TO BE RELEVANT | |
|---|---|---|
| Category* | Citation of document, with indication, where appropriate, of the relevant passages | Relevant to claim No. |
| A | US 2021167375 A1 (CONTEMPORARY AMPEREX TECHNOLOGY CO., LTD.) 03 June 2021 (2021-06-03) abstract | 1-17 |

Form PCT/ISA/210 (second sheet) (July 2022)

**INTERNATIONAL SEARCH REPORT**
Information on patent family members

International application No.

**PCT/CN2024/074905**

| Patent document cited in search report | | | Publication date (day/month/year) | Patent family member(s) | | | Publication date (day/month/year) |
|---|---|---|---|---|---|---|---|
| CN | 116190633 | A | 30 May 2023 | None | | | |
| CN | 116207359 | A | 02 June 2023 | None | | | |
| CN | 111435742 | A | 21 July 2020 | WO | 2020143531 | A1 | 16 July 2020 |
| | | | | US | 2021336258 | A1 | 28 October 2021 |
| | | | | EP | 3907794 | A1 | 10 November 2021 |
| | | | | EP | 3907794 | A4 | 16 March 2022 |
| | | | | EP | 3907794 | B1 | 15 November 2023 |
| CN | 115911332 | A | 04 April 2023 | None | | | |
| US | 2021167375 | A1 | 03 June 2021 | JP | 2022513834 | A | 09 February 2022 |
| | | | | JP | 7082716 | B2 | 08 June 2022 |
| | | | | KR | 20210092775 | A | 26 July 2021 |
| | | | | KR | 102457600 | B1 | 20 October 2022 |
| | | | | WO | 2020143532 | A1 | 16 July 2020 |
| | | | | PT | 3800712 | T | 07 December 2022 |
| | | | | US | 11196046 | B2 | 07 December 2021 |
| | | | | ES | 2932158 | T3 | 13 January 2023 |
| | | | | EP | 3800712 | A1 | 07 April 2021 |
| | | | | EP | 3800712 | A4 | 17 November 2021 |
| | | | | EP | 3800712 | B1 | 09 November 2022 |

Form PCT/ISA/210 (patent family annex) (July 2022)